# EUROPEAN PATENT SPECIFICATION

(11) **EP 4 180 327 B1**
(45) Date of publication and mention of the grant of the patent: **06.05.2026**
(21) Application number: 22207366.0
(22) Date of filing: 15.11.2022
(51) Int. Cl.: B64D 1/22, B66C 1/38, B64U 101/64

(54) **AN UNMANNED AERIAL VEHICLE**
UNBEMANNTES LUFTFAHRZEUG
VÉHICULE AÉRIEN SANS PILOTE

(30) Priority: 15.11.2021 CN 202122786951 U
(43) Date of publication of application: 17.05.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- EP-A1- 3 492 380
- CN-A- 111 960 255
- US-A1- 2008 083 100
- US-A1- 2019 256 210
- US-A1- 2021 309 357
- US-B2- 8 985 658

## Description

### Technical Field

The invention relates to unmanned aerial vehicle manufacturing technology field, and especially relates to an unmanned aerial vehicle.

### Background Art

With the continuous development of unmanned aerial vehicle technology, more and more industries and individuals are used the UAV for transporting and releasing to-be-transported piece. The existing unmanned aerial vehicle (UAV) usually uses electric controlled releasing mechanism, so as to lift the to-be-transported piece during flying, and when reaching the destination, releasing the to-be-transported piece.

However, through the above-mentioned releasing way, the control signal is easy to be influenced by the shielding object, in addition, on one hand, the electric control of the releasing mechanism increased the consumption of the electric quantity, on the other hand, because the mechanism is more complicated to increase the weight and manufacturing cost of the unmanned aerial vehicle, influence the endurance ability of the unmanned aerial vehicle.

US 2021/ 309 357 A1 relates to a UAV, which includes a chassis, a power supply mounted to the chassis, a control system operable to receive power from the power supply, at least one rotor operable to generate lift under control of the control system, and a winch mounted to the chassis. CN 111 960 255 A relates to an automatic decoupling mechanism for hoisting equipment. US 8 985 658 B2 relates to a carabiner comprising a body having an opening and a closure movably coupled to the body, the closure being movable to an open position, and to a closed position. US 2008/ 083 100 A1 relates to a retractable hook, which is used to couple a portable article to another thing. EP 3 492 380 A1 relates to a delivered article loading apparatus, which is mounted to a lifting wire installed at a drone. US 2019/ 256 210 A1 relates to a payload retrieval apparatus.

### Summary of the Invention

The purpose of the invention is to provide an unmanned aerial vehicle, the unmanned aerial vehicle can realize the automatic releasing of the to-be-transported piece, and the structure is simple, it is easy to realize, it can reduce the manufacturing cost of the unmanned aerial vehicle and improve the endurance ability of the unmanned aerial vehicle.

For this purpose, the invention uses the following technical solution:
The invention provides an unmanned aerial vehicle, having the features defined in claim 1. Further preferred embodiments are defined in the dependent claims.

The beneficial effects of the invention are as follows: During transportation, the to-be-transported piece is hooked to the bottom of the mounting groove under the gravity effect of the to-be-transported piece and deforms the reset component, when the to-be-transported piece lands to the ground, the force of the to-be-transported piece on the reset component disappears, the to-be-transported piece moves towards the opening direction of the mounting groove under the reset function of the reset component and is automatically separated from the mounting groove, so as to realize automatic releasing after the to-be-transported piece lands to the ground. The UAV can realize the automatic releasing of a to-be-transported piece, and the structure is simple, it is easy to realize, it can reduce the manufacturing cost of the UAV and improve the endurance ability of the UAV.

### Brief Description of the Figures

FIG. 1 is a structure schematic diagram of the releasing mechanism provided by the embodiment of the present invention;
FIG. 2 is a sectional view of the dispensing structure provided by the embodiment of the present invention.

In the drawings:
1. mounting piece; 11. mounting groove; 12. sliding groove; 13. avoiding groove;
2. reset component; 21. reset piece; 22. sliding block; 23. guide piece;
100. to-be-transported piece.

### Description of the Preferred Embodiments

In order to make the technical problem of the invention to be solved, the technical solution and the technical effect more clear, the technical solution of the embodiment of the invention will be further described in detail in combination with the accompanying drawings, obviously, the described embodiment is only a part of the embodiment of the invention, but not all of the embodiments. Based on the embodiment of the invention, all other embodiments obtained by those skilled in the art without creative work belong to the protection scope of the invention.

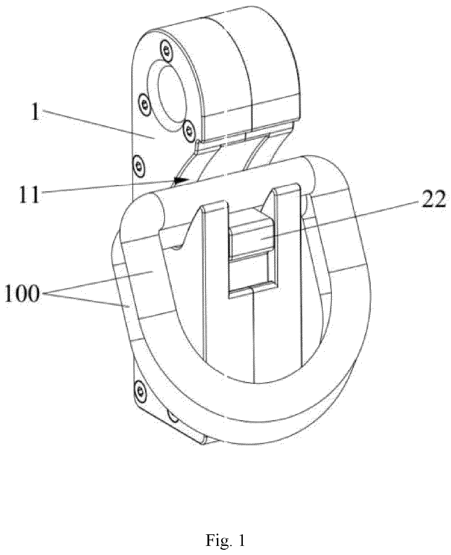

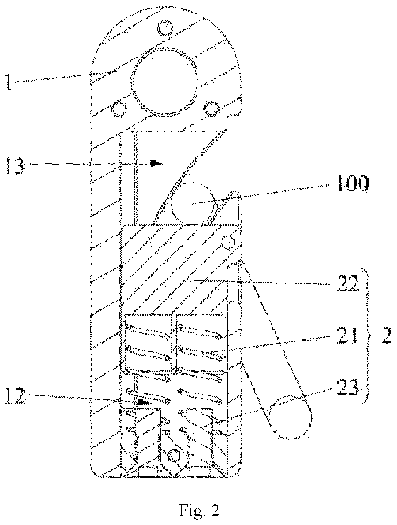

The embodiment of the invention provides an unmanned aerial vehicle (UAV), as shown in FIG. 1 and FIG. 2. The UAV is used to transport the to-be-transported piece 100, the UAV comprises an unmanned aerial vehicle body and a releasing mechanism, the releasing mechanism comprises a mounting piece 1 and a reset component 2, the mounting piece 1 is connected with the unmanned aerial vehicle body; the mounting piece 1 is provided with a mounting groove 11. The opening direction of the mounting groove 11 extends upwards, the to-be-transported piece 100 can be hooked in the mounting groove 11; the reset component 2 is configured to be deformed under the gravity effect of the to-be-transported piece 100 when the to-be-transported piece 100 is lifted, and when the to-be-transported piece 100 lands to the ground, the reset component is reset to drive the to-be-transported piece 100 to be separated from the mounting groove 11. During transportation, the to-be-transported piece 100 is hooked to the bottom of the mounting groove 11 under the gravity effect of the to-be-transported piece 100, it can ensure the reliable transportation, at the same time to-be-transported piece 100 acts on the reset component 2 to deform the reset component 2, when the UAV flies to the designated position and the to-be-transported piece 100 lands to the ground, the force of to-be-transported piece 100 to the reset component 2 disappears, the reset component 2 reset and move the to-be-transported piece 100 to the opening direction of the mounting groove 11, so as to realize an automatic unhooking. The UAV can realize automatic releasing of the to-be-transported piece 100, and the structure is simple, it is easy to realize, it can reduce the manufacturing cost of the UAV and improve the endurance ability of the UAV.

In this embodiment, the to-be-transport piece 100 can be a cargo hold, also can be rescue cabin, also can be the cargo to be transported, can be set according to the actual use needs, the embodiment does not limit this.

Exemplarily, the angle between the extension direction of the mounting groove 11 and the vertical direction is 15 to 45 degrees, on one hand it can ensure the reliable transportation of to-be-transported piece 100, preventing to-be-transported piece 100 from separating from the mounting groove 11 during transportation, on the other hand, when the to-be-transported piece 100 lands to the ground, the to-be-transported piece 100 can be smoothly separated from the mounting groove 11 under the reset function of the reset component 2.

Specifically, as shown in FIG. 2, the mounting piece 1 is further provided with a sliding groove 12, the sliding groove 12 is connected to the mounting groove 11, the reset component 2 is set in the sliding groove 12 and can be abutted against the to-be-transported piece 100. The sliding groove 12 is additionally arranged to accommodate the reset component 2, so that the mounting groove 11 can provide limiting function to the to-be-transported piece 100, at the same time, the sliding groove 12 can further reduce the weight of the releasing mechanism, so as to improve the endurance ability of the UAV.

Of course, the setting position of the reset component 2 is not limited to this. In an example helpful in understanding the invention, the reset component 2 can also be set in the mounting groove 11, and two ends of the reset component 2 can be respectively abutted against the bottom of the mounting groove 11 and the to-be-transported piece 100, it can be set according to the actual need.

Further, the sliding groove 12 extends along the vertical direction, compared with condition that the sliding groove 12 extends at an angle with the horizontal direction, a large size of the sliding groove 12 can be obtained when the size of the mounting piece 1 is certain, so as to increase the mounting space of the reset component 2 and further reduce the weight of the releasing mechanism.

As shown in FIG. 2, the reset component 2 comprises a reset piece 21 and a sliding block 22 which are connected, the reset piece 21 is located between the bottom of the sliding groove 12 and the sliding block 22, the sliding block 22 is slidably matched with the sliding groove 12 and can be abutted against the to-be-transported piece 100; through abutting the sliding block 22 and the to-be-transported piece 100, can ensure reliability and stability of the reset component 2 and the to-be-transported piece 100, so as to ensure the to-be-transported piece 100 can automatically unhook when landing.

In this embodiment, the reset piece 21 is a spring.

It can be understood that the reset piece 21 has a preset rigidity, during transportation, the to-be-transported piece 100 can under its gravity effect to compress the reset piece 21, and the to-be-transported piece 100 can be close to the bottom of the mounting groove 11, when the to-be-transported piece 100 lands to the ground; the reset function of the reset piece 21 also can make the to-be-transported piece 100 away from the mounting groove 11.

Specifically, the sliding block 22 is provided with a guide hole, one end of the reset piece 21 close to the sliding block 22 is set in the guide hole and can be abutted against the top wall of the guide hole, on one hand it can provide limiting function to the reset piece 21 to ensure the reset effect of the reset piece 21, so that the to-be-transported piece 100 capable of automatically unhooking, on the other hand, it can simply realize the connection of the reset piece 21 and the sliding block 22, reduce the parts used for connecting, and reduce the manufacturing cost of the releasing structure.

As shown in FIG. 2, the reset component 2 further comprises a guide piece 23, the guide piece 23 is set on the bottom of the sliding groove 12, one end of the reset piece 21 away from the sliding block 22 is sleeved on the guide piece 23, the guide piece 23 is set to further improve the guide effect of the reset piece 21, so as to further ensure the reset effect of the reset piece 21. It can be understood that, because the sliding block 22 moves downwards, the guide piece 23 can extend into the guide hole, so the guide piece 23 will not affect the travel of sliding block 22 in the vertical direction.

Specifically, the guide piece 23 comprises a screw thread part and a guide part which are connected in sequence, the mounting piece 1 is provided with a first screw thread hole, the screw thread part is matched with the first screw thread hole, the reset piece 21 is sleeved on the guide part. The connection between the guide piece 23 and the mounting piece 1 is realized through thread fitting; it can facilitate the assembly of the releasing mechanism and reduce the manufacturing and processing cost of the releasing mechanism.

Preferably, the number of the reset piece 21 is at least two, each reset piece 21 is connected to the sliding block 22, so as to improve the stability of the sliding block 22 when sliding in the sliding groove 12, so as to further improve the contact stability and reliability of the sliding block 22 and the to-be-transported piece 100. In this embodiment, the number of the reset piece 21 is two, two reset piece 21 are spaced in the sliding groove 12, the guide hole and the guide piece 23 are set to the reset piece 21 respectively.

Preferably, one of the side walls of the sliding block 22 and the sliding groove 12 is provided with a protuberance, the other one of the side walls of the sliding block 22 and the sliding groove 12 is provided with a guide groove. The protuberance can be slidably fitted in the guide groove, so as to further provide guide for the sliding block 22, so as to increase the sliding smoothness of the sliding block 22, ensuring the abutting effect of the to-be-transported piece 100.

In this embodiment, two sides of the sliding block 22 are provided with at least two protuberance, two opposite side walls of the sliding groove 12 are respectively provided with a guide groove, each protuberance can be slidably fitted in the corresponding guide groove, so as to further improve the guide effect of the sliding block 22.

Further, the upper side wall of the sliding groove 12 is further provided with a avoiding groove 13, so as to avoid the sliding of the sliding block 22, so as to ensure the automatic unhooking effect of the to-be-transported piece 100 at the same time, avoiding groove 13 is capable of further reducing the weight of the releasing mechanism.

Preferably, the mounting piece 1 comprises two oppositely set shells, two shells are surrounded to form the sliding groove 12, the mounting groove 11 and the avoiding groove 13, which can facilitate the manufacturing and assembly of reset component 2.

Specifically, one of the shells is provided with at least one second thread hole, the other one is provided with a through-hole corresponding to the second thread hole, the releasing mechanism further comprises a fastener, the fastener can pass through the through-hole and thread fit in the second thread hole, so as to realize the connection of two shells.

Optionally, the number of the releasing mechanism can be at least two, each releasing mechanism is connected to the unmanned aerial vehicle body, so as to improve the transportation capacity of the UAV, expanding the use range of the UAV.

It can be understood that each releasing mechanism can be used for lifting or releasing one to-be-transported piece 100, each releasing mechanism further can be used for lifting or releasing at least two to-be-transported piece 100, can be set according to actual transportation needs, the embodiment is not limited.

In the description of the specification, it should be noted that the terms "center", "upper", "lower", "left", "right", "vertical", "horizontal", "inner", the orientation or position relationship indicated by "outside" is based on the orientation or position relationship shown in the accompanying drawings, only for the purpose of describing the present embodiment and simplifying the description, and not to indicate or imply that the device or structure must have a specific orientation, it is constructed and operated in a specific orientation, so it is not to be understood as limiting the present invention. In addition, the term "first", "second" are used only for the purpose of description, and cannot be understood as indicating or implying relative importance, wherein the terms "first position" and "second position" are two different positions.

Unless otherwise specified and defined, the term "installation", "connection", "fixation" should be broadly understood, for example, it may be a fixed connection, or may be a detachable connection, can be mechanical connection, also can be electric connection, can be directly connected, also can be indirectly connected through the intermediate medium, can be the connection of two elements or the interaction relation of two elements. For those of ordinary skill in the art, it can be understood that the term in the specific meaning of the invention can be understood according to the specific situation.

Unless otherwise specified and defined, the first feature "on" or "below" of the second feature may include a first feature and a second feature directly, contact may include a first feature and a second feature that are not directly contact but through the other feature contact them. Furthermore, the first characteristic is on the second characteristic " above ", " upper " and " upper " comprises the first characteristic above and inclined above the second characteristic, or only represents the first characteristic level height is higher than the second characteristic. The first feature is under the second feature "below", "below" and "below" include the first feature below and below the second feature, or only the first feature level height is less than the second feature.

In addition, the above is only the preferred embodiment of the invention and the applied technical principle. It will be understood by those skilled in the art that the present invention is not limited to the specific embodiments described herein, and is capable of various obvious changes to those skilled in the art, and readjustment and replacement without departing from the protection scope of the invention as defined by the appended claims.

## Claims

1. An unmanned aerial vehicle for transporting a to-be-transported piece, wherein the unmanned aerial vehicle comprises an unmanned aerial vehicle body and a releasing mechanism, the releasing mechanism comprising
a mounting piece (1), connected with the unmanned aerial vehicle body, whereby the mounting piece (1) is provided with a mounting groove (11), the opening direction of the mounting groove (11) extends upwards, the to-be-transported piece (100) can be hooked in the mounting groove (11);
a reset component (2), whereby reset component (2) is configured to be deformed under the gravity effect of the to-be-transported piece (100) when the to-be-transported piece (100) is lifted, and when the to-be-transported piece (100) lands to the ground, the reset component (2) is reset to drive the to-be-transported piece (100) to be separated from the mounting groove (11),
wherein the mounting piece (1) is further provided with a sliding groove (12), the sliding groove (12) is connected to the mounting groove (11), the reset component (2) is set in the sliding groove (12) and can be abutted against the to-be-transported piece (100),
wherein the reset component (2) comprises a reset piece (21) and a sliding block (22) which are connected,
and wherein the sliding block (22) is slidably matched with the sliding groove (12) and can be abutted against the to-be-transported piece (100),
**characterized in that**,
the reset piece (21) is located between a bottom of the sliding groove (12) and the sliding block (22),
wherein the sliding block (22) is provided with a guide hole, one end of the reset piece (21) close to the sliding block (22) is sleeved into the guide hole and can be abutted against a top wall of the guide hole,
and wherein the reset component (2) further comprises a guide piece (23), the guide piece (23) is set on the bottom of the sliding groove (12), one end of the reset piece (21) away from the sliding block (22) is sleeved on the guide piece (23).

2. The unmanned aerial vehicle according to Claim 1, whereby the sliding groove (12) extends along the vertical direction.

3. The unmanned aerial vehicle according to Claim 1, whereby the guide piece (23) comprises a screw thread part and a guide part which are connected in sequence, the mounting piece (1) is provided with a first screw thread hole, the screw thread part is matched with the first screw thread hole; the reset piece (21) is sleeved on the guide part.

4. The unmanned aerial vehicle according to Claim 1, whereby the number of the reset piece (21) is at least two, each of the reset piece (21) is connected to the sliding block (22).

5. The unmanned aerial vehicle according to Claim 1, whereby the reset component (2) is set in the mounting groove (11), and the two ends of the reset component (2) can be respectively abutted against the bottom of the mounting groove (11) and the to-be-transported piece (100).

6. The unmanned aerial vehicle according to any one of Claim 1 to 5, whereby the number of the releasing mechanism is at least two, each of the releasing mechanism is connected to the unmanned aerial vehicle body.

## Patentansprüche

1. Unbemanntes Luftfahrzeug zum Befördern eines zu befördernden Gegenstands, wobei das unbemannte Luftfahrzeug einen Körper des unbemannten Luftfahrzeugs und einen Freigabemechanismus umfasst, wobei der Freigabemechanismus Folgendes umfasst:
ein Montagestück (1), das mit dem Körper des unbemannten Luftfahrzeugs verbunden ist, wobei das Montagestück (1) mit einer Montagerille (11) versehen ist, die Öffnungsrichtung der Montagerille (11) sich nach oben erstreckt und der zu befördernde Gegenstand (100) in der Montagerille (11) eingehakt sein kann;
eine Rückstellkomponente (2), wobei die Rückstellkomponente (2) konfiguriert ist, unter der Schwerkraftwirkung des zu befördernden Gegenstands (100) verformt zu werden, wenn der zu befördernde Gegenstand (100) angehoben wird, und wobei dann, wenn der zu befördernde Gegenstand (100) auf dem Boden landet, die Rückstellkomponente (2) derart zurückgestellt wird, dass der zu befördernde Gegenstand (100) auf eine Weise angetrieben wird, dass er von der Montagerille (11) getrennt wird,
wobei das Montagestück (1) ferner mit einer Gleitrille (12) versehen ist, die Gleitrille (12) mit der Montagerille (11) verbunden ist und die Rückstellkomponente (2) in die Gleitrille (12) eingesetzt ist und an dem zu transportierenden Gegenstand (100) anliegen kann,
wobei die Rückstellkomponente (2) ein Rückstellteil (21) und einen Gleitblock (22) umfasst, die verbunden sind, und
wobei der Gleitblock (22) gleitfähig auf die Gleitrille (12) abgestimmt ist und an dem zu befördernden Gegenstand (100) anliegen kann,
**dadurch gekennzeichnet, dass**
das Rückstellteil (21) zwischen einem Boden der Gleitrille (12) und dem Gleitblock (22) angeordnet ist,
wobei der Gleitblock (22) mit einem Führungsloch versehen ist, ein Ende des Rückstellteils (21), das sich nahe am Gleitblock (22) befindet, in das Führungsloch eingeschoben ist und an einer oberen Wand des Führungslochs anliegen kann, und
wobei die Rückstellkomponente (2) ferner ein Führungsteil (23) umfasst, das Führungsteil (23) auf den Boden der Gleitrille (12) gesetzt ist und ein Ende des Rückstellteils (21), das vom Gleitblock (22) entfernt ist, auf das Führungsteil (23) aufgeschoben ist.

2. Unbemanntes Luftfahrzeug nach Anspruch 1, wobei sich die Gleitrille (12) in der vertikalen Richtung erstreckt.

3. Unbemanntes Luftfahrzeug nach Anspruch 1, wobei das Führungsteil (23) einen Schraubengewindeabschnitt und einen Führungsabschnitt umfasst, die der Reihe nach verbunden sind, das Montagestück (1) mit einem ersten Schraubengewindeloch versehen ist und der Schraubengewindeabschnitt auf das erste Schraubengewindeloch abgestimmt ist; wobei das Rückstellteil (21) auf den Führungsabschnitt aufgeschoben ist.

4. Unbemanntes Luftfahrzeug nach Anspruch 1, wobei die Anzahl des Rückstellteils (21) mindestens zwei ist und jedes der Rückstellteile (21) mit dem Gleitblock (22) verbunden ist.

5. Unbemanntes Luftfahrzeug nach Anspruch 1, wobei die Rückstellkomponente (2) in die Montagerille (11) eingesetzt ist und die zwei Enden der Rückstellkomponente (2) am Boden der Montagerille (11) bzw. an dem zu befördernden Gegenstand (100) anliegen können.

6. Unbemanntes Luftfahrzeug nach einem der Ansprüche 1 bis 5, wobei die Anzahl des Freigabemechanismus mindestens zwei ist und jeder der Freigabemechanismen mit dem Körper des unbemannten Luftfahrzeugs verbunden ist.

## Revendications

1. Véhicule aérien sans équipage destiné à transporter une pièce à transporter, dans lequel le véhicule aérien sans équipage comprend un corps de véhicule aérien sans équipage et un mécanisme de libération, le mécanisme de libération comprenant une pièce de montage (1), connectée au corps de véhicule aérien sans équipage, dans lequel la pièce de montage (1) est dotée d'une rainure de montage (11), la direction d'ouverture de la rainure de montage (11) s'étend vers le haut, la pièce à transporter (100) peut être accrochée dans la rainure de montage (11) ;
un composant de repositionnement (2), dans lequel le composant de repositionnement (2) est configuré pour être déformé sous l'effet de gravité de la pièce à transporter (100) quand la pièce à transporter (100) est soulevée, et quand la pièce à transporter (100) touche le sol, le composant de repositionnement (2) est replacé pour amener la pièce à transporter (100) à être séparée de la rainure de montage (11),
dans lequel la pièce de montage (1) est en outre dotée d'une rainure de coulissement (12), la rainure de coulissement (12) étant connectée à la rainure de montage (11), le composant de repositionnement (2) étant positionné dans la rainure de coulissement (12) et pouvant être amené en butée contre la pièce à transporter (100),
dans lequel le composant de repositionnement (2) comprend une pièce de repositionnement (21) et un bloc de coulissement (22) qui sont connectés,
et dans lequel le bloc de coulissement (22) est apparié par coulissement avec la rainure de coulissement (12) et peut être amené en butée contre la pièce à transporter (100),
**caractérisé en ce que**
la pièce de repositionnement (21) est située entre un fond de la rainure de coulissement (12) et le bloc de coulissement (22),
dans lequel le bloc de coulissement (22) est doté d'un trou de guidage, une extrémité de la pièce de repositionnement (21) proche du bloc de coulissement (22) est emmanchée dans le trou de guidage et peut être amenée en butée contre une paroi supérieure du trou de guidage,
et dans lequel le composant de repositionnement (2) comprend en outre une pièce guidage (23), la pièce de guidage (23) étant positionnée sur le fond de la rainure de guidage (12), une extrémité de la pièce de repositionnement (21) en éloignement du bloc de coulissement (22) étant emmanchée sur la pièce de guidage (23).

2. Véhicule aérien sans équipage selon la revendication 1, dans lequel la rainure de coulissement (12) s'étend le long de la direction verticale.

3. Véhicule aérien sans équipage selon la revendication 1, dans lequel la pièce de guidage (23) comprend une partie à pas de vis et une partie de guidage qui sont connectées en séquence, la pièce de montage (1) étant dotée d'un premier trou à pas de vis, la partie à pas de vis étant appariée avec le premier trou à pas de vis ; la pièce de repositionnement (21) est emmanchée sur la partie de guidage.

4. Véhicule aérien sans équipage selon la revendication 1, dans lequel la pièce de repositionnement (21) est au nombre de deux au moins, chaque pièce de repositionnement (21) étant connectée au bloc de coulissement (22).

5. Véhicule aérien sans équipage selon la revendication 1, dans lequel le composant de repositionnement (2) est positionné dans la rainure de montage (11), et les deux extrémités du composant de repositionnement (2) peuvent être respectivement amenées en butée contre le fond de la rainure de montage (11) et la pièce à transporter (100).

6. Véhicule aérien sans équipage selon l'une quelconque des revendications 1 à 5, dans lequel le mécanisme de libération est au nombre de deux au moins, chaque mécanisme de libération étant connecté au corps de véhicule aérien sans équipage.
